# EUROPEAN PATENT SPECIFICATION

(11) **EP 4 477 508 B1**
(45) Date of publication and mention of the grant of the patent: **23.09.2026**
(21) Application number: 24182247.7
(22) Date of filing: 14.06.2024
(51) Int. Cl.: B62H 1/04, B62K 7/00

(54) **CYCLE STAY PARTICULARLY FOR CARGO BIKE AND THE LIKE**
FAHRRADHALTER INSBESONDERE FÜR EIN LASTENFAHRRAD UND DERGLEICHEN
SUPPORT DE BICYCLETTE, EN PARTICULIER POUR VÉLO CARGO ET ANALOGUE

(30) Priority: 16.06.2023 IT 202300012396
(43) Date of publication of application: 18.12.2024
(73) Proprietor: Ursus S.P.A., 36027 Rosà (VI) (IT)
(72) Inventor: FERRONATO, Sergio, 36027 ROSA' (VI) (IT)
(74) Representative: Marchioro, Paolo

(56) References cited:
- EP-A1- 2 226 242
- EP-A1- 3 868 635
- WO-A1-2021/005040
- CN-A- 106 542 024
- FR-A1- 2 748 444
- JP-U- S62 173 283
- JP-U- S63 147 379
- NL-C2- 1 031 066
- US-A1- 2010 072 726

## Description

The invention concerns a cycle stay particularly for cargo bikes.

Transport bicycles, also known as cargo bikes, that is some bicycles or some velocipedes designed and built specifically for the transport of people, animals and goods, are now known and increasingly widespread in the cycling sector. The main types of such transport bikes are:
- 'Long John', in which a loading platform is located between the pedals and the front wheel;
- 'Long Tail', in which the load is positioned above the rear wheel;
- tricycles, in which the box is fixed to the 2 front or rear wheels.

Cargo bikes therefore differ from normal bikes in their transport capacity. They are often capable of carrying 200 kg and beyond, while a normal bike is around 100 kg. In order to be able to move this mass safely, cargo bikes have heavy, reinforced frames. A cargo bike can weigh as much as 27 kg in the version without a motor and even 45 kg with the motor. These weights add up to the load, reaching as much as 250 - 300 kg of moving mass.

While most of the bikes are usually equipped with a side stand, cargo bikes generally comprise a central cycle stay, capable of ensuring a more stable and robust parking position.

Such a central cycle stay typically comprises two ground support rods, or a 'U'-shaped bracket, which cycle stay allows the front or rear wheel to be lifted off the ground when it is in a lowered working setup.

In fact, these cargo bikes need to be supported during non-use by cycle stays with two support rods that allow a simultaneous double support and the maintenance of the centre of gravity of the cargo bike on a vertical plane that is also of substantial symmetry of the bike itself.

Such two-rod cycle stays of known type are generally defined by a single metal bar folded substantially into a 'U' or 'V' shape, to the central section of which the rotation pin and reversible locking means of the cycle stay are associated in a first, lowered and resting setup, or in a second, raised and travelling setup. Since cargo bikes are altogether very heavy, especially when they are more or less loaded, the operations of lowering the cycle stay are also burdensome in terms of effort and fatigue on the part of a user.

In fact, it is known that in order to position a two-rod cycle stay into a lowered operating setup, it is necessary firstly to rotate the cycle stay downwards with a foot, then, when the lower ends of the cycle stay are resting on the ground, it is necessary to pull the bike frame with force so that the rods of the cycle stay still rotate with respect to the frame until they overcome an unstable equilibrium point in which the support rods are perpendicular to the ground, and so that these support rods are arranged in a stable setup in which their rotation is prevented in one direction by the end-stroke elements and in the opposite direction by the force-weight of the cargo bike itself.

These operations are imposed by the fact that these cycle stays have support rods whose length in the vertical direction is greater than the distance of their axis of rotation with respect to the ground.

To prevent a user of a cargo bike from having to carry out these tiring operations repeatedly on the same day every time he or she has to park the cargo bike, two-rod cycle stays are now known whose support rods have a length in the vertical direction that is substantially equal to the distance of their axis of rotation with respect to the ground.

These support rods of reduced length, when lowered, must be kept in the lowered working setup by reversible locking means, which in turn must comprise quick release means in order to allow the support rods to rotate upwards in the resting and travelling setup.

These prior-art cycle stays also have automatic lifting means, usually a traction spring, configured to allow the automatic rotation of the support rods from the lowered and resting setup to the raised and travelling setup.

These automatic lifting means are usually arranged laterally and externally between one of the support rods and the fixing bracket of the same cycle stays for connection with the bike. This is required by the fact that the rotation pin is inserted in the central part of the cycle stay, which necessarily extends over the entire width of the same cycle stay, in order to prevent a misalignment of the same pin and therefore an unwanted oscillation of the support rods with respect to the bracket for fixing to the bike. This configuration, therefore, guarantees greater stability of the elements that make up the same cycle stay. However, the presence of this pass-through pin along the entire central part of the cycle stay does not allow to define a sufficient space for the insertion also of the aforementioned automatic lifting means in the same central area and one is therefore forced, as seen above, to insert the latter laterally to the same cycle stay.

These cycle stays, although known and appreciated, have the disadvantage that the presence in an external lateral position with respect to the support rods of the automatic lifting means results in a further encumbrance and impediment to the lifting and lowering of the cycle stay by a user.

In addition, this encumbrance due to the presence of the aforementioned automatic lifting means can prevent the insertion on the same cycle stay of locking means more effective than those known.

Therefore, the task of the present invention is to develop a cycle stay particularly for cargo bikes capable of overcoming the aforementioned drawbacks and limitations of the prior art.

Document JP S62 173283 U discloses a cycle stay according to the preamble of claim 1.

In particular, an object of the invention is to develop a cycle stay whose structure is less cumbersome and uncomfortable than known cycle stays.

It is also an object of the invention to develop a cycle stay that in any case guarantees a high stability of the elements that make it up and therefore a greater stability of the bicycle on which this cycle stay is fixed.

Advantageously, greater stability of the components that make up the cycle stay is aimed at making the cycle stay of the invention less subject to stresses and therefore to possible breakages.

The task as well as the above mentioned purposes are achieved by a cycle stay particularly for cargo bikes according to claim 1.

Further characteristics of the cycle stay according to claim 1 are described in the dependent claims.

The task and the aforesaid objects, together with the advantages that will be mentioned hereinafter, are indicated by the description of an embodiment of the invention, which is given by way of non-limiting example with reference to the attached drawings, where:
- figure 1 represents a perspective view of a cycle stay according to the invention in a first setup of use;
- figure 2 represents a front view of the cycle stay of figure 1;

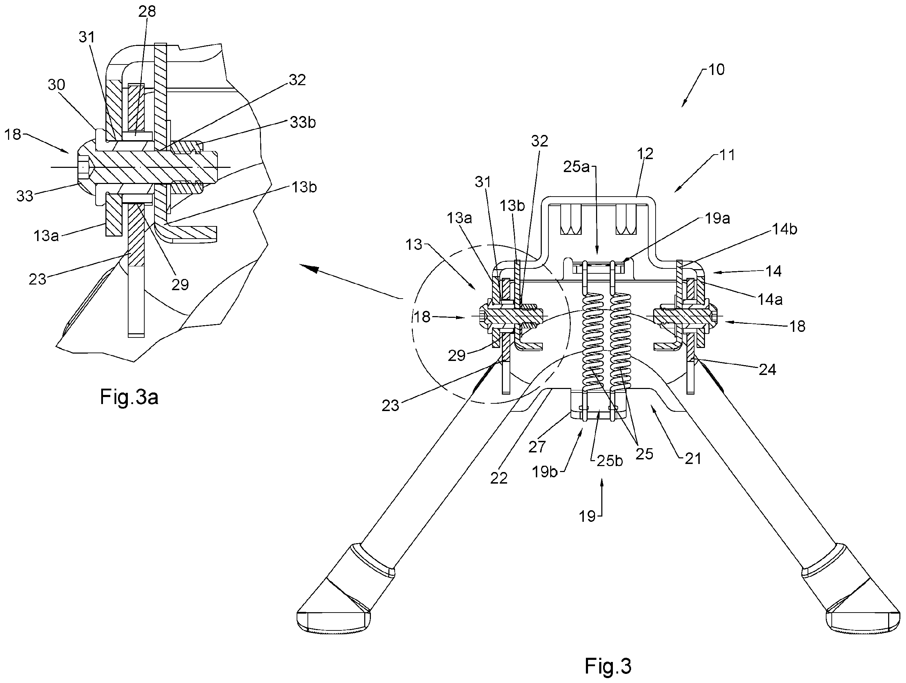

- figure 3 represents a sectional view of the front view of figure 2;
- figure 3a is a detail of figure 3;
- figure 4 represents in an isolated front view the fixing bracket of the cycle stay of figure 1;
- figure 5 represents in an isolated front view the rotatable bracket of the cycle stay of figure 1;
- figure 6 represents in exploded front view the pivoting means of the cycle stay of figure 1;
- figure 7 represents in exploded axonometric view the pivoting means of the cycle stay of figure 1;
- figure 8 represents a perspective view of a cycle stay according to the invention in a second setup of use;

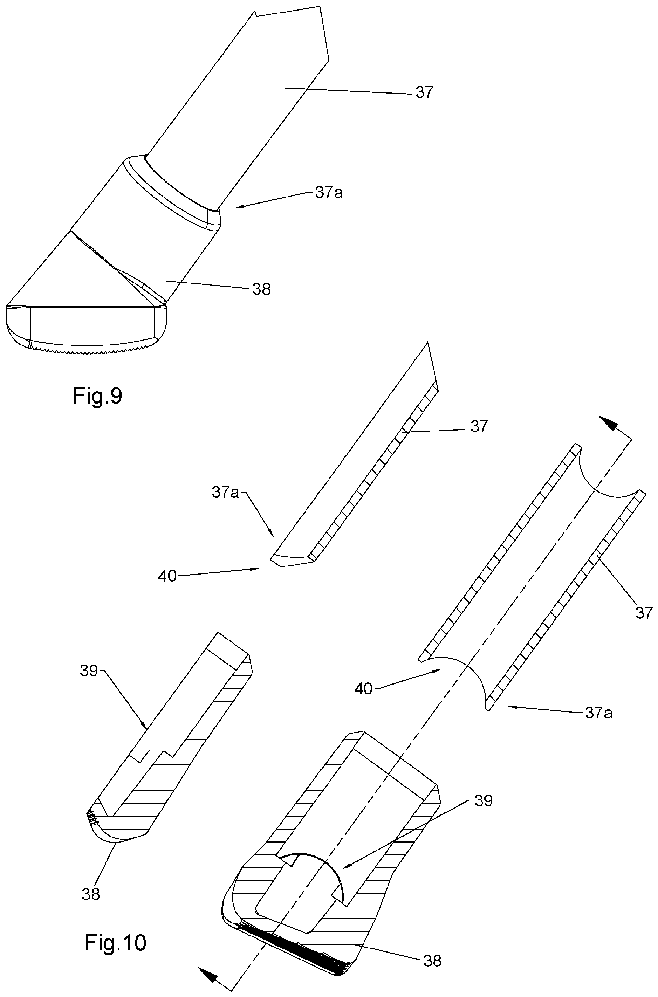

- figure 9 represents a detail of a leg and of the relative support foot of the cycle stay of the invention;
- figure 10 represents in exploded view and according to two section plans the leg and the support foot of figure 9;
- figure 11 represents a schematic side view of a cargo bike comprising a cycle stay according to the invention.

With reference to the cited figures, a two-rod cycle stay particularly for cargo bikes and the like according to the invention is indicated as a whole with number **10.**

This cycle stay **10** comprises:
- a fixed bracket **11** configured to be fixed to a frame of a bicycle;
- a support group **16** comprising at least one ground support portion **17;** the support group **16** is hinged with pivoting means **18** to the fixed bracket **11** and is configured to assume a raised resting setup, adjacent to the frame of the bicycle, and a lowered working setup, with the at least one ground support portion **17** positioned in contact with the ground;
- automatic lifting means **19** configured to allow the automatic rotation of the support group **16** from the lowered working setup to the raised resting setup.

Furthermore, preferably but not necessarily, said cycle stay **10** of the invention also comprises reversible locking means, not depicted in the figures, configured to stabilize the position of the support group **16** with respect to the fixed bracket **11** in the lowered working setup.

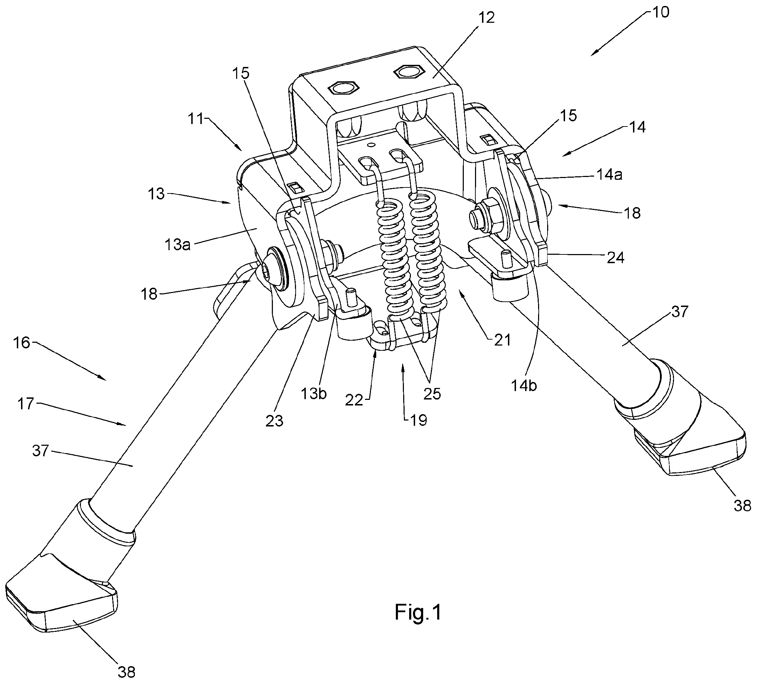

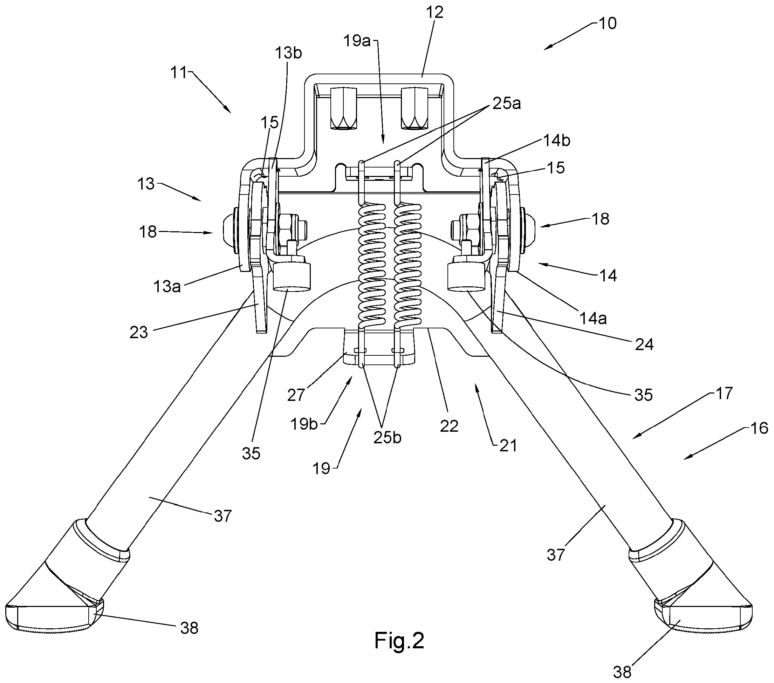

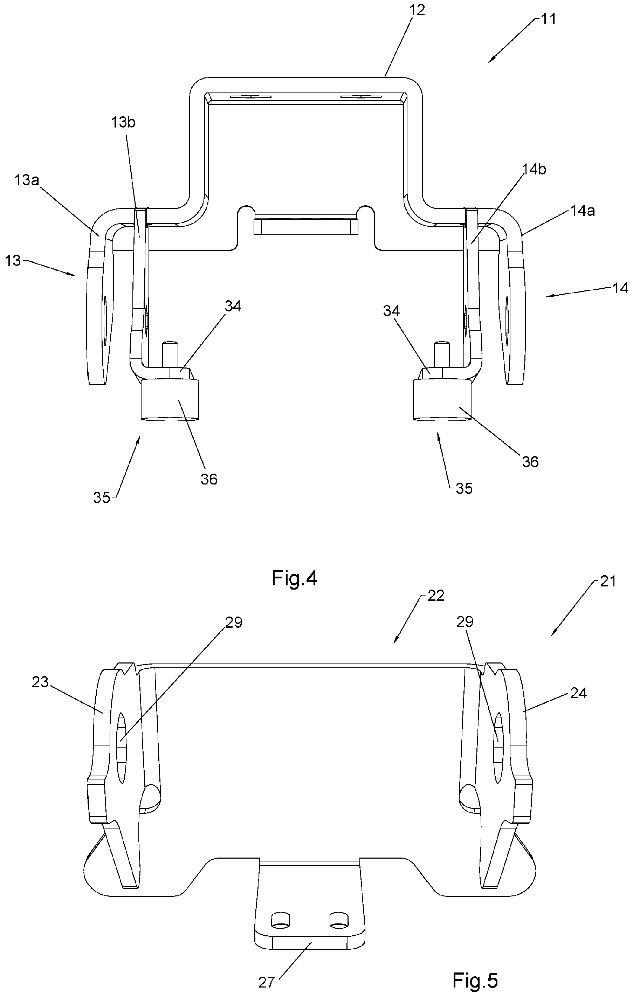

The peculiarity of the cycle stay **10** according to the invention, as can be observed in figs. 1 and 2, resides in the fact that the fixed bracket **11** comprises a first central part **12** for the fixing to a frame of a bike, and two opposite pairs of first side walls **13** and **14** defined on opposite parts of the first central part **12.** Each of the two pairs of first side walls **13** and **14,** as can be observed in the detail of fig. 4, provides a first external side wall **13a** and **14a** and a first internal side wall **13b** and **14b** side by side and spaced from one another so as to define between them a fulcrum seat **15** for the support group **16.**

According to the preferred embodiment of the invention, the first internal side walls **13b** and **14b** are made as stand-alone elements with respect to the fixing bracket **11,** in particular with respect to the first central part **12,** and subsequently coupled fixedly to the latter so as to define the aforementioned fulcrum seats 15. Even more in detail, said first internal side walls **13b** and **14b,** once properly positioned with respect to the first central part **12,** are welded on the latter.

It is not excluded, however, that according to different embodiments of the invention also these first internal side walls **13b** and **14b** are made as a single body with the fixing bracket **11.**

In turn, the support group **16** comprises a rotatable bracket **21** and the aforementioned ground support portion **17** fixed to the same rotatable bracket **21.** In particular, as can be observed in the detail of fig. 5, the rotatable bracket **21** comprises a second central part **22** and two opposite second side walls **23** and **24,** where each of the second side walls **23** and **24** is inserted in one of the aforementioned fulcrum seats **15** and is hinged between the first external side wall **13a** and **14a** and the first internal side wall **13b** and **14b** of each of the two pairs of first side walls **13** and **14** by means of the pivoting means 18.

This particular configuration allows, on the one hand, to avoid the need to provide a pass-through pin along the entire width of the cycle stay, in order to keep the structure of the same cycle stay stable, and therefore in order to avoid the oscillation of the support group **16** with respect to the fixed bracket **11.** In fact, the solution that provides for the definition of two first external **13a** and **14a** and internal **13b** and **14b** side walls of each pair of first side walls **13** and **14** between which the second side wall **23** and **24** of the support group **16** is pivoted, however, allows to prevent the misalignment of the axis of rotation between the same support group **16** and the fixing bracket **11.**

On the other hand, this solution, alternative to the pass-through pin along the entire width of the cycle stay, allows to obtain a free space centrally to the structure of the cycle stay **10** itself; a free space that, advantageously, can be exploited for the insertion of the aforementioned automatic lifting means **19.**

In fact, according to the preferred embodiment of the invention, it is provided that such automatic lifting means **19** are hooked at a first end **19a** to the fixed bracket **11** between the two pairs of first side walls **13** and **14** and at the second end **19b** to the rotatable bracket **21** between the two second side walls **23** and **24.** This advantageously allows to avoid the encumbrance and the impediments of the arrangement of the automatic lifting means **19** laterally and externally to one of the support legs of the support group 16.

Even more specifically, said automatic lifting means **19** comprise, preferably but not necessarily, two traction springs **25** hooked, parallel to each other, at a first end **25a** to a first central hooking portion **26** of the fixed bracket **11** between the two pairs of first side walls **13** and **14** and at the second end **25b** to a second central hooking portion **27** of the rotatable bracket **21** between the two second side walls **23** and **24.**

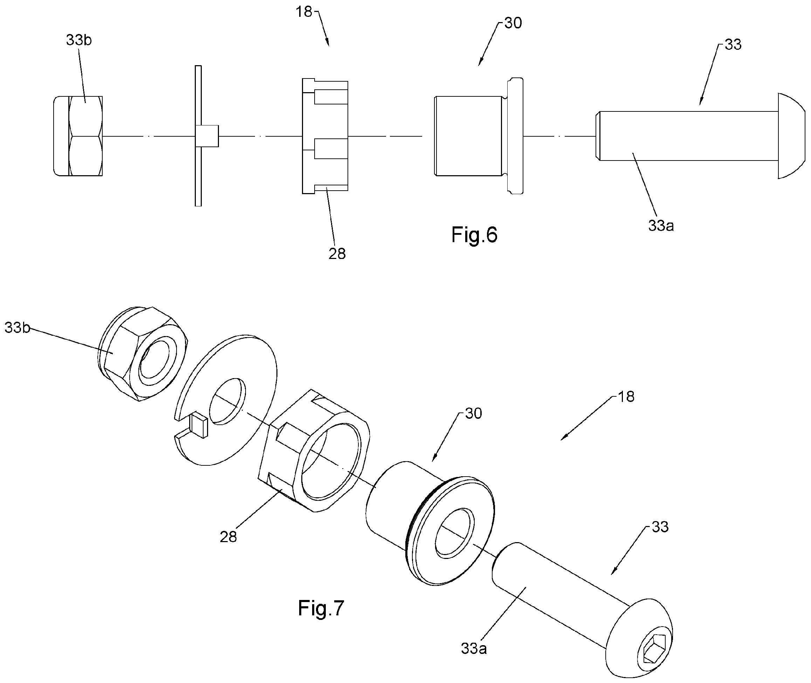

As regards the pivoting means **18,** as can be observed in the details of figs. 6 and 7, for each of the two pairs of first side walls **13** and **14** and of the relative second side walls **23** and **24,** they comprise according to the invention:
- a first external bushing **28** having a circular internal profile and a polygonal external profile, preferably hexagonal, fixedly coupled to a hole **29** with complementary profile, made on said second side wall **23** and **24**;
- a second internal bushing **30,** arranged passing through and fixedly coupled to two holes **31** and **32** made respectively on the first external and internal side wall of each of the two pairs of first side walls **13** and **14.** The second internal bushing **30** has, in particular, its external surface rotatably coupled to the internal surface of the first external bushing **28.**

Furthermore, preferably, this second internal bushing **30** is flanged on the end turned outwards of the cycle stay **10.**

Finally, said pivoting means **18** provide according to the invention a rotation pin **33** inserted through the second internal bushing **30** and comprising a screw portion **33a** and a tightening nut **33b.**

This particular configuration, on the one hand, makes it possible to define two rotation pins **33** that are structurally stable, thus avoiding misalignments and/or oscillations of the support group **16** with respect to the fixing bracket **11.**

On the other hand, the fact of using bushings as elements distinct from the first side walls of each pair of side walls **13** and **14** and from the second side walls **23** and **24** allows to be able to implement periodic maintenance of the cycle stay **10,** in particular of those movable elements, such as precisely the bushings **28** and **30** and the rotation pin **33,** so as to maintain optimal performance and functionalities of the same cycle stay **10** also over time.

In this sense, indeed, in order to be able to restore the initial operating conditions of the cycle stay **10,** it is sufficient to intervene only on the aforementioned bushes **28** and **30** and/or on the rotation pin **33,** or to replace them, leaving the remaining elements unaltered, i.e. the parts/walls that define the fixing bracket **11** and the support group **16.**

Even more preferably, the first external bushing **28** and the second internal bushing **30** are made of polymeric material, of bronze or of tempered steel, or of any similar material that can guarantee the reduction of friction between the surfaces in contact with the first and with the second bushing and of wear of the same elements.

Otherwise, the components that make up the fixing bracket **11** and the support group **16** are made of steel or any similar material that allows to guarantee a structural solidity and rigidity to the cycle stay **10.**

A further aspect of the invention, as can be observed in fig. 4, concerns the fact that the first internal side wall **13b** and **14b** of each of the two pairs of first side walls **13** and **14** comprises, at its free end **34,** vibration damping means **35** facing away from the first central part **12.**

In particular, the two free ends **34** of the first internal side walls **13b** and **14b** are folded internally so that the same free ends **34** face each other.

These vibration damping means **35** are fixed to said free ends **34** at their lower surface, in the normal configuration of use of the cycle stay **10.**

As regards such vibration damping means **35,** they are preferably two rubber elements **36** each fixed at the aforesaid lower surface of the folded end **34** of each first internal side wall **13b** and **14b.**

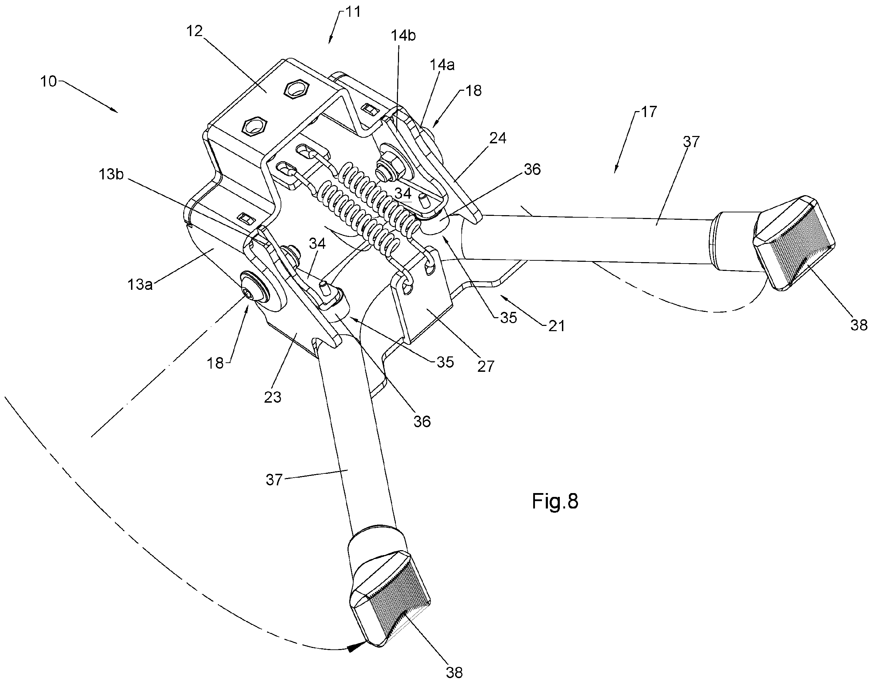

These vibration damping means **35,** in particular, as can be observed in fig. 8, are configured to come into contact with the ground support portion **17** of the support group **16** when the same support group **16** is in its raised resting setup.

In this way, advantageously, the ground support portion **17** is prevented from coming directly into contact with the two pairs of first side walls **13** and **14** of the fixing bracket **11.**

According to the preferred embodiment of the invention, the ground support portion **17** comprises two symmetrical legs **37,** defining between them a substantially inverted 'V' or inverted 'U' shape, at the free end of each of said legs **37** there being present a support foot **38.**

In particular, each of the support feet **38** is a stand-alone element with respect to the leg **37** and is removably coupled to the free end **37a** of the leg **37.**

The support feet **38** are made of elastically deformable material, preferably of rubber.

This last aspect, advantageously, allows to increase the grip to the ground of the cycle stay **10** compared to the realization of the support foot of metal material.

Furthermore, the fact that the support foot **38** is made as a stand-alone element with respect to the leg **37** and is removably coupled to the free end **37a** of the same leg **37** allows its replacement in order to restore the original functionalities of the cycle stay **10.**

Even more preferably but not necessarily, the free end **37a** of the leg **37** and the support foot **38** have complementary shapings configured to allow their coupling and to prevent the rotation of the same support foot **38** with respect to said free end **37a.**

According to a preferred embodiment of the invention, said shapings provide at least one protrusion **39** made starting from the base of the support foot **38** and a corresponding and complementary housing **40** defined at the free end **37a** of the leg **37,** so that, when the support foot **38** is coupled to said free end **37a** of the leg **37,** the protrusion **39** is received in the housing **40,** thus preventing the mutual rotation of the two coupled elements.

Alternatively, the protrusion could be obtained in the end of the leg and the housing at the base of the foot.

Furthermore, alternatively, more protrusions and a complementary number of housings could be provided.

An object of the invention is also a cargo bike **50** comprising a cycle stay **10** as described above.

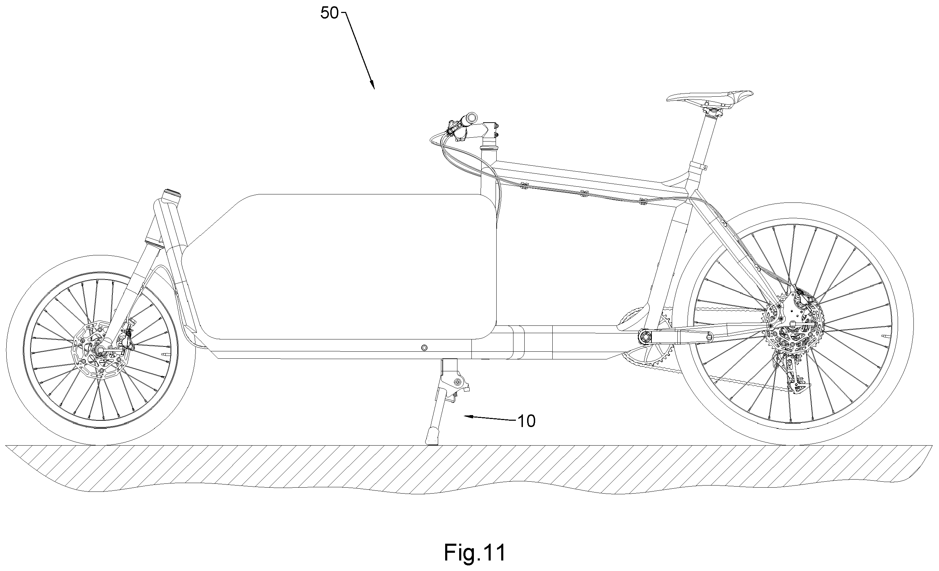

A similar cargo bike is schematically depicted in figure 11.

Practically, it has been established that the invention achieves the intended task and objects.

In particular, the object of the invention to develop a cycle stay whose structure is less cumbersome and uncomfortable than known cycle stays is achieved.

Furthermore, the object of the invention to develop a cycle stay that in any case guarantees a high stability of the elements that make it up and therefore a greater stability of the bicycle on which this cycle stay is fixed is achieved. Advantageously, greater stability of the components that make it up achieves the object of making the cycle stay of the invention less subject to stresses and therefore to possible breakages.

Where the features and techniques mentioned in any claim are followed by reference marks, such reference marks are intended to be affixed solely for the purpose of increasing the intelligibility of the claims and, consequently, such reference marks have no limiting effect on the interpretation of each element identified by way of example by such reference marks.

## Claims

1. Cycle stay (10) particularly for cargo bikes and the like, comprising:
- a fixed bracket (11) configured to be fixed to a frame of a bicycle;
- a support group (16) comprising at least one ground support portion (17), said support group (16) being hinged with pivoting means (18) to said fixed bracket (11), and being configured to assume a raised resting setup, adjacent to said frame of a bicycle, and a lowered working setup, with said at least one ground support portion (17) positioned in contact with the ground;
- automatic lifting means (19) configured to allow the automatic rotation of said support group (16) from said lowered working setup to said raised resting setup,
wherein:
- said fixed bracket (11) comprises a first central part (12) for the fixing to a frame of a bike, and two opposite pairs of first side walls (13, 14) defined on opposite parts of said first central part (12), each of said pairs of first side walls (13, 14) providing a first external side wall (13a, 14a) and a first internal side wall (13b, 14b) side by side and spaced from one another so as to define between them a fulcrum seat (15) for said support group (16);
- said support group (16) comprises a rotatable bracket (21) and said ground support portion (17) fixed to said rotatable bracket (21), said rotatable bracket (21) comprising a second central part (22) and two opposite second side walls (23, 24), where each of said second side walls (23, 24) is inserted in one of said fulcrum seats (15) and is hinged between said first external side wall (13a, 14a) and said first internal side wall (13b, 14b) of each of said pairs of first side walls (13, 14) by means of said pivoting means (18);
said pivoting means (18) for each of said pairs of first side walls (13, 14) and the relative second side wall (23, 24) comprising:
- a first external bushing (28) having a circular internal profile;
- a second internal bushing (30) passing through and fixedly coupled to two holes (31, 32) made on said first external and internal side walls (13a, 14a, 13b, 14b) of each of said pairs of first side walls (13, 14), said second internal bushing (30) having its external surface rotatably coupled to the internal surface of said first external bushing (28);
- a rotation pin (33) inserted through said second internal bushing (30) and comprising a screw portion (33a) and a tightening nut (33b);
**characterized in that** said first external bushing (28) has a polygonal external profile fixedly coupled to a hole (29) with complementary profile made on said second side wall (23, 24).

2. Cycle stay (10) according to claim 1, **characterized in that** said automatic lifting means (19) are hooked at a first end (19a) to said fixed bracket (11) between said two pairs of first side walls (13, 14), and at the second end (19b) to said rotatable bracket (21) between said two second side walls (23, 24).

3. Cycle stay (10) according to claim 2, **characterized in that** said automatic lifting means (19) comprise two traction springs (25) hooked together, parallel, at a first end (25a) to a first central hooking portion (26) of the fixed bracket (11) between said two pairs of first side walls (13, 14), and at the second end (25b) to a second central hooking portion (27) of the rotatable bracket (21) between said two second side walls (23, 24).

4. Cycle stay (10) according to any one of the preceding claims, **characterized in that** each of said first external bushing (28) and second internal bushing (30) are made of polymeric material, of bronze or of tempered steel.

5. Cycle stay (10) according to any one of the preceding claims, **characterized in that** said first internal side wall (13b, 14b) of each pair of first side walls (13, 14) comprises, at its free end (34), vibration damping means (35) facing away from said first central part (12).

6. Cycle stay (10) according to claim 5, **characterized in that** said free ends (34) of said first internal side walls (13b, 14b) are folded internally so as to face each other.

7. Cycle stay (10) according to one or more of the preceding claims, **characterized in that** said ground support portion (17) comprises two symmetrical legs (37), defining between them a substantially inverted 'V' or inverted 'U' shape, at the free end (37a) of each of said legs (37) there being present a support foot (38).

8. Cycle stay (10) according to claim 7, **characterized in that** each of said support feet (38) is a stand-alone element with respect to said leg (37) and is removably coupled to said free end (37a) of said leg (37), said support feet (38) being made of elastically deformable material.

9. Cycle stay (10) according to claim 8, **characterized in that** said free end (37a) of said leg (37) and said support foot (38) have complementary shapings configured to allow their coupling and to prevent the rotation of said support foot (38) with respect to said free end (37a).

10. Cycle stay (10) according to any one of the preceding claims, **characterized in that** it comprises reversible locking means configured to stabilize the position of said support group (16) with respect to said fixed bracket (11) in said lowered working setup.

11. Cargo bike (50), **characterized in that** it comprises a cycle stay (10) according to any one of the preceding claims.

## Patentansprüche

1. Fahrradständer (10), insbesondere für Lastenfahrräder und dergleichen, umfassend:
- eine feste Halterung (11), die dazu konfiguriert ist, an einem Rahmen eines Fahrrads befestigt zu werden;
- eine Stützgruppe (16), die mindestens einen Bodenstützabschnitt (17) umfasst, wobei die besagte Stützgruppe (16) mit Schwenkmitteln (18) an der besagten festen Halterung (11) angelenkt und dazu konfiguriert ist, eine angehobene Ruhestellung, angrenzend an den besagten Rahmen eines Fahrrads, und eine abgesenkte Arbeitsstellung anzunehmen, wobei der besagte mindestens eine Bodenstützabschnitt (17) in Kontakt mit dem Boden positioniert ist;
- automatische Hebemittel (19), die dazu konfiguriert sind, die automatische Drehung der besagten Stützgruppe (16) von der besagten abgesenkten Arbeitsstellung zur besagten angehobenen Ruhestellung zu ermöglichen,
wobei:
- die besagte feste Halterung (11) Folgendes umfasst: einen ersten Mittelteil (12) zur Befestigung an einem Rahmen eines Fahrrads und zwei gegenüberliegende Paare von ersten Seitenwänden (13, 14), die an gegenüberliegenden Teilen des besagten ersten Mittelteils (12) definiert sind, wobei jedes der besagten Paare von ersten Seitenwänden (13, 14) eine erste äußere Seitenwand (13a, 14a) und eine erste innere Seitenwand (13b, 14b), die nebeneinander positioniert und voneinander beabstandet sind, bereitstellt, um zwischen diese einen Drehpunktsitz (15) für die besagte Stützgruppe (16) zu definieren;
- die besagte Stützgruppe (16) eine drehbare Halterung (21) und den besagten Bodenstützabschnitt (17) umfasst, der an der besagten drehbaren Halterung (21) befestigt ist, wobei die besagte drehbare Halterung (21) einen zweiten Mittelteil (22) und zwei gegenüberliegende zweite Seitenwände (23, 24) umfasst, wobei jede der besagten zweiten Seitenwände (23, 24) in einen der besagten Drehpunktsitze (15) eingesetzt ist und mittels der besagten Schwenkmittel (18) zwischen der besagten ersten äußeren Seitenwand (13a, 14a) und der besagten ersten inneren Seitenwand (13b, 14b) jedes der besagten Paare von ersten Seitenwänden (13, 14) angelenkt ist;
wobei die besagten Schwenkmittel (18) für jedes der besagten Paare von ersten Seitenwänden (13, 14) und die entsprechende zweite Seitenwand (23, 24) Folgendes umfassen:
- eine erste Außenbuchse (28) mit einem kreisförmigen Innenprofil;
- eine zweite Innenbuchse (30), die durch zwei Löcher (31, 32), die an den besagten ersten äußeren und inneren Seitenwänden (13a, 14a, 13b, 14b) jedes der besagten Paare von ersten Seitenwänden (13, 14) ausgebildet sind, verläuft und fest mit diesen gekoppelt ist, wobei die Außenfläche der besagten zweiten Innenbuchse (30) drehbar mit der Innenfläche der besagten ersten Außenbuchse (28) gekoppelt ist;
- einen Drehstift (33), der durch die besagte zweite Innenbuchse (30) eingeführt ist und einen Schraubabschnitt (33a) und eine Spannmutter (33b) umfasst;
**dadurch gekennzeichnet, dass** die besagte erste Außenbuchse (28) ein polygonales Außenprofil aufweist, das fest mit einem Loch (29) mit komplementärem Profil gekoppelt ist, das an der besagten zweiten Seitenwand (23, 24) ausgebildet ist.

2. Fahrradständer (10) nach Patentanspruch 1, **dadurch gekennzeichnet, dass** die besagten automatischen Hebemittel (19) an einem ersten Ende (19a) an der besagten festen Halterung (11) zwischen den besagten zwei Paaren von ersten Seitenwänden (13, 14) und am zweiten Ende (19b) an der besagten drehbaren Halterung (21) zwischen den besagten zwei zweiten Seitenwänden (23, 24) eingehakt sind.

3. Fahrradständer (10) nach Patentanspruch 2, **dadurch gekennzeichnet, dass** die besagten automatischen Hebemittel (19) zwei Zugfedern (25) umfassen, die parallel an einem ersten Ende (25a) mit einem ersten zentralen Einhängeabschnitt (26) der festen Halterung (11) zwischen den besagten zwei Paaren von ersten Seitenwänden (13, 14) und am zweiten Ende (25b) mit einem zweiten zentralen Einhängeabschnitt (27) der drehbaren Halterung (21) zwischen den besagten zwei zweiten Seitenwänden (23, 24) zusammen eingehängt sind.

4. Fahrradständer (10) nach jeglichem der vorhergehenden Patentansprüche, **dadurch gekennzeichnet, dass** die besagte erste Außenbuchse (28) und die besagte zweite Innenbuchse (30) jeweils aus Polymermaterial, aus Bronze oder aus vergütetem Stahl hergestellt sind.

5. Fahrradständer (10) nach jeglichem der vorhergehenden Patentansprüche, **dadurch gekennzeichnet, dass** die besagte erste innere Seitenwand (13b, 14b) jedes Paares von ersten Seitenwänden (13, 14) an ihrem freien Ende (34) Schwingungsdämpfungsmittel (35) umfasst, die dem besagten ersten Mittelteil (12) abgewandt sind.

6. Fahrradständer (10) nach Patentanspruch 5, **dadurch gekennzeichnet, dass** die besagten freien Enden (34) der besagten ersten inneren Seitenwände (13b, 14b) nach innen gefaltet sind, sodass sie einander zugewandt sind.

7. Fahrradständer (10) nach einem oder mehreren der vorhergehenden Patentansprüche, **dadurch gekennzeichnet, dass** der besagte Bodenstützabschnitt (17) zwei symmetrische Schenkel (37) umfasst, die zwischen sich eine im Wesentlichen umgekehrte "V"- oder "U"-Form definieren, wobei am freien Ende (37a) jedes der besagten Schenkel (37) ein Stützfuß (38) vorhanden ist.

8. Fahrradständer (10) nach Patentanspruch 7, **dadurch gekennzeichnet, dass** jeder der besagten Stützfüße (38) ein eigenständiges Element in Bezug auf den besagten Schenkel (37) ist und lösbar mit dem besagten freien Ende (37a) des besagten Schenkels (37) gekoppelt ist, wobei die besagten Stützfüße (38) aus elastisch verformbarem Material hergestellt sind.

9. Fahrradständer (10) nach Patentanspruch 8, **dadurch gekennzeichnet, dass** das besagte freie Ende (37a) des besagten Schenkels (37) und der besagte Stützfuß (38) komplementäre Ausformungen aufweisen, die konfiguriert sind, um ihre Kopplung zu ermöglichen und die Drehung des besagten Stützfußes (38) in Bezug auf das besagte freie Ende (37a) zu verhindern.

10. Fahrradständer (10) nach jeglichem der vorhergehenden Patentansprüche, **dadurch gekennzeichnet, dass** er reversible Verriegelungsmittel umfasst, die dazu konfiguriert sind, die Position der besagten Stützgruppe (16) in Bezug auf die besagte feste Halterung (11) in der besagten abgesenkten Arbeitsstellung zu stabilisieren.

11. Lastenfahrrad (50), **dadurch gekennzeichnet, dass** es einen Fahrradständer (10) nach jeglichem der vorhergehenden Patentansprüche umfasst.

## Revendications

1. Support de vélo (10) destiné notamment aux vélos cargo et similaires, comprenant:
- un support fixe (11) conçu pour être fixé au cadre d'un vélo;
- un ensemble de support (16) comprenant au moins une partie d'appui au sol (17), ledit ensemble de support (16) étant articulé avec des moyens de pivotement (18) sur ledit support fixe (11), et étant conçu pour prendre une configuration de repos relevée, adjacente audit cadre de vélo, et une configuration de travail abaissée, ladite au moins une partie d'appui au sol (17) étant alors en contact avec le sol;
- des moyens de levage automatiques (19) configurés pour permettre la rotation automatique dudit ensemble de support (16) de ladite configuration de travail abaissée à ladite configuration de repos relevée,
où:
- ledit support fixe (11) comprend une première partie centrale (12) destinée à être fixée au cadre d'un vélo, et deux paires opposées de premières parois latérales (13, 14) définies sur des parties opposées de ladite première partie centrale (12), chacune desdites paires de premières parois latérales (13, 14) formant une première paroi latérale externe (13a, 14a) et une première paroi latérale interne (13b, 14b) disposées côte à côte et espacées l'une de l'autre de manière à définir entre elles un siège de pivot (15) pour ledit ensemble de support (16);
- ledit ensemble de support (16) comprend un support pivotant (21) et ladite partie d'appui au sol (17) fixée audit support pivotant (21), ledit support pivotant (21) comprenant une deuxième partie centrale (22) et deux deuxièmes parois latérales opposées (23, 24), où chacune desdites deuxièmes parois latérales (23, 24) est insérée dans l'un desdits sièges de pivot (15) et est articulée entre ladite première paroi latérale externe (13a, 14a) et ladite première paroi latérale interne (13b, 14b) de chacune desdites paires de premières parois latérales (13, 14) à l'aide desdits moyens de pivotement (18);
lesdits moyens de pivotement (18) pour chacune desdites paires de premières parois latérales (13, 14) et la deuxième paroi latérale correspondante (23, 24) comprenant:
- une première douille externe (28) présentant un profil interne circulaire;
- une deuxième douille interne (30) traversant et étant couplée de manière fixe à deux trous (31, 32) pratiqués sur lesdites premières parois latérales externes et internes (13a, 14a, 13b, 14b) de chacune desdites paires de premières parois latérales (13, 14), ladite deuxième douille interne (30) ayant sa surface externe couplée de manière rotative à la surface interne de ladite première douille externe (28);
- une tige de rotation (33) insérée à travers ladite deuxième douille interne (30) et comprenant une partie filetée (33a) et un écrou de serrage (33b);
**caractérisé en ce que** ladite première douille externe (28) présente un profil externe polygonal couplé de manière fixe à un trou (29) avec un profil complémentaire pratiqué sur ladite deuxième paroi latérale (23, 24).

2. Support de vélo (10) selon la revendication 1, **caractérisé en ce que** lesdits moyens de levage automatiques (19) sont accrochés à une première extrémité (19a) audit support fixe (11) entre lesdites deux paires de premières parois latérales (13, 14), et à la deuxième extrémité (19b) audit support pivotant (21) entre lesdites deux deuxièmes parois latérales (23, 24).

3. Support de vélo (10) selon la revendication 2, **caractérisé en ce que** lesdits moyens de levage automatiques (19) comprennent deux ressorts de traction (25) accrochés ensemble, parallèlement, à une première extrémité (25a) à une première partie d'accrochage centrale (26) du support fixe (11) entre lesdites deux paires de premières parois latérales (13, 14), et à la deuxième extrémité (25b) à une deuxième partie d'accrochage centrale (27) du support pivotant (21) entre lesdites deux deuxièmes parois latérales (23, 24).

4. Support de vélo (10) selon l'une quelconque des revendications précédentes, **caractérisé en ce que** ladite première douille externe (28) et ladite deuxième douille interne (30) sont chacune réalisées en matériau polymère, en bronze ou en acier trempé.

5. Support de vélo (10) selon l'une quelconque des revendications précédentes, **caractérisé en ce que** ladite première paroi latérale interne (13b, 14b) de chaque paire de premières parois latérales (13, 14) comprend, à son extrémité libre (34), des moyens d'amortissement des vibrations (35) orientés à l'opposé de ladite première partie centrale (12).

6. Support de vélo (10) selon la revendication 5, **caractérisé en ce que** lesdites extrémités libres (34) desdites premières parois latérales internes (13b, 14b) sont repliées vers l'intérieur de manière à se faire face.

7. Support de vélo (10) selon l'une ou plusieurs des revendications précédentes, **caractérisé en ce que** ladite partie d'appui au sol (17) comprend deux branches symétriques (37), définissant entre elles une forme sensiblement en 'V' inversé ou en 'U' inversé, un pied d'appui (38) étant présent à l'extrémité libre (37a) de chacune desdites branches (37).

8. Support de vélo (10) selon la revendication 7, **caractérisé en ce que** chacun desdits pieds d'appui (38) est un élément autonome par rapport à ladite branche (37) et est couplé de manière amovible à ladite extrémité libre (37a) de ladite branche (37), lesdits pieds d'appui (38) étant réalisés en un matériau élastiquement déformable.

9. Support de vélo (10) selon la revendication 8, **caractérisé en ce que** ladite extrémité libre (37a) de ladite branche (37) et ledit pied d'appui (38) présentent des configurations complémentaires conçues pour permettre leur accouplement et pour empêcher la rotation dudit pied d'appui (38) par rapport à ladite extrémité libre (37a).

10. Support de vélo (10) selon l'une quelconque des revendications précédentes, **caractérisé en ce qu'**il comprend des moyens de verrouillage réversibles configurés pour stabiliser la position dudit ensemble de support (16) par rapport audit support fixe (11) dans ladite configuration de travail abaissée.

11. Vélo cargo (50), **caractérisé en ce qu'**il comprend un support de vélo (10) selon l'une quelconque des revendications précédentes.
